# EUROPÄISCHE PATENTSCHRIFT

(11) **EP 3 417 970 B1**
(45) Veröffentlichungstag und Bekanntmachung des Hinweises auf die Patenterteilung: **06.04.2022**
(21) Anmeldenummer: 18177144.5
(22) Anmeldetag: 12.06.2018
(51) Int. Cl.: B23G 3/00, B23B 41/00, B23D 75/00, B21D 28/12

(54) **BOHRWERKZEUG UND VERFAHREN ZUM BETRIEB EINES BOHRWERKZEUGES**
DRILLING OR TAPPING TOOL AND METHOD FOR OPERATING SAME
OUTIL DE PERÇAGE OU DE TARAUDAGE ET PROCÉDÉ D'OPÉRATION DE CET OUTIL

(30) Priorität: 22.06.2017 DE 102017210463
(43) Veröffentlichungstag der Anmeldung: 26.12.2018
(73) Patentinhaber: PASS Stanztechnik AG, 95473 Creußen (DE)
(72) Erfinder: Kraft, Stefan, 91289 Schnabelwaid (DE); Deuerlein, Andreas, 91349 Egloffstein (DE)
(74) Vertreter: Rau, Schneck & Hübner Patentanwälte Rechtsanwälte PartGmbB

(56) Entgegenhaltungen:
- EP-A1- 0 666 134
- DE-A1- 4 445 363

## Beschreibung

Die Erfindung betrifft ein Bohrwerkzeug für eine Stanzvorrichtung, insbesondere für eine Revolver-Stanzvorrichtung. Ferner betrifft die Erfindung ein Verfahren zum Betrieb eines Bohrwerkzeuges für eine Stanzvorrichtung, insbesondere eine Revolverstanz-Vorrichtung.

Derartige Bohrwerkzeuge sind beispielsweise aus der EP 2 311 592 B1 bekannt. Aus der DE 103 93 603 B4 sind ein Verfahren sowie eine Vorrichtung zum Gewindeschneiden bekannt, wobei die Vorrichtung eine drehfest mit einem Gewindebohrer verbundene und über ein Schneckenrad drehantreibbare Drehhülse umfasst. Die DE 10 2014 215 951 A1 offenbart ein Mehrfachwerkzeug für eine Stanzvorrichtung mit einer Gewindeschneider-Antriebseinrichtung zum Antrieb eines aktiven Gewindeschneiders.

Entsprechende Bohrwerkzeuge sind ferner bekannt aus der DE 44 45 363 A1, die ein Bohrwerkzeug nach dem Oberbegriff des Anspruchs 1 offenbart, und aus der EP 0 666 134 A1.

Es ist eine Aufgabe der vorliegenden Erfindung, die Einsatzmöglichkeiten einer Stanzvorrichtung, insbesondere mit Fest-Station, zu erweitern.

Diese Aufgabe ist erfindungsgemäß gelöst durch ein Bohrwerkzeug mit den im Anspruch 1 angegebenen Merkmalen.

Erfindungsgemäß wurde erkannt, dass das Bohrwerkzeug für die Stanzvorrichtung flexibel auf Fest-Stationen und Index-Stationen des Maschinen-Revolvers der Stanzvorrichtung betrieben werden kann und ein besonders präzises Bearbeiten eines Werkstücks ermöglicht, wenn es derart ausgeführt ist, dass die Übertragung der Drehbewegung von dem externen Antrieb auf den Werkzeugkopf mittels des Stößeleingriffs erfolgt, es von dem externen Antrieb ausschließlich über den Stößeleingriff angetrieben ist und der Werkzeug-Schaft ein Übertragungselement zur Umwandlung der Drehbewegung des Werkzeugkopfes in eine kombinierte Dreh- und Hubbewegung des Bohrmittels umfasst.

Durch die Übertragung der Drehbewegung des Werkzeugkopfes in eine kombinierte Dreh- und Hubbewegung des Bohrmittels kann eine exakte Synchronisation zwischen Dreh- und Hubbewegung erfolgen. Hierdurch kann beispielsweise ein Gewinde besonders präzise in das Werkstück geschnitten. Das Übertragungselement kann in Form eines Getriebes, insbesondere in Form eines Spindelhubgetriebes, insbesondere mit einer Leitspindel und einer Leitmutter, oder in Form eines Kugelgewindetriebes oder in Form eines Trapezgewindes ausgeführt sein. Eine Übertragung von Hubbewegungen von der Stanzvorrichtung auf das Bohrwerkzeug zum Einbringen des Gewindes in das Werkstück kann entfallen. Vorzugsweise ist der Werkzeugkopf über das Übertragungselement drehfest mit dem Bohrmittel verbunden.

Das Bohrwerkzeug kann somit auch auf einer Fest-Station eines Maschinen-Revolvers der Stanzvorrichtung betrieben werden. Die Fest-Station weist in der Regel keine Antriebskomponenten in Form eines Werkzeug-Antriebes auf. Hierdurch unterscheidet sich die Fest-Station von einer Index-Station, welche zur Übertragung von Drehbewegungen mit dem externen Antrieb der Stanzvorrichtung über den Werkzeug-Antrieb in Verbindung steht. Das Bohrwerkzeug kann auch auf der Index-Station betrieben werden. Ein über den Stößeleingriff auf das Bohrwerkzeug einwirkender Stößel der Stanzvorrichtung ist bei gängigen Ausführungsvarianten der Stanzvorrichtung drehangetrieben. Mittels des drehangetriebenen Stößels kann die Auswahl von Bearbeitungswerkzeugen innerhalb eines Mehrfachwerkzeug-Einsatzes, insbesondere eines Mehrfachwerkzeug-Revolvers, erfolgen. Der Betrieb des Bohrwerkzeuges auf der Fest-Station der Stanzvorrichtung wird durch die Nutzung des Drehantriebes des Stößels ermöglicht. Der Stößel wird normalerweise für Stanzvorgänge und/oder zur Auswahl des Bearbeitungswerkzeuges der Index-Station verwendet. Das Bohrwerkzeug wird dabei ausschließlich über den Stößel angetrieben. Durch die Möglichkeit des Betreibens des Bohrwerkzeuges auf der Fest-Station des Maschinen-Revolvers können die Flexibilität und die Effizienz der Stanzvorrichtung gesteigert werden. Zusätzliche Antriebskomponenten, insbesondere in Form des Werkzeug-Antriebes, zum Antrieb des Bohrwerkzeuges werden nicht benötigt.

Das in dem Werkzeug-Schaft aufgenommene Bohrmittel kann als Bohrer zur Erzeugung zylindrischer Ausnehmungen, insbesondere als Spiralbohrer, oder als Gewindebohrer, insbesondere als Einschnitt-Gewindebohrer oder als eine Stufe eines Gewindebohrersatzes, oder als Reibahle ausgebildet sein. Unter der Bezeichnung Gewindebohrer sollen auch Gewindeschneider und Gewindeformer verstanden werden.

Der Stößeleingriff kann derart ausgeführt sein, dass er eine lösbare Verbindung mit dem Stößel gewährleistet. Die Übertragung der Drehbewegung von dem Stößel, über den Stößeleingriff, auf den Werkzeugkopf kann formschlüssig oder kraftschlüssig erfolgen.

Das Bohrwerkzeug kann eine Schmiereinrichtung aufweisen. Bewegliche Teile des Bohrwerkzeuges und/oder das Bohrmittel können hierdurch mit Schmier- und oder Kühlstoffen versorgt werden. Insbesondere kann die Schmiereinrichtung zur Führung des Schmier- oder Kühlstoffes als eine, insbesondere axial orientierte, Schaftnut an dem Werkzeug-Schaft, insbesondere an einer inneren Umfangsfläche des Werkzeug-Schaftes, ausgebildet sein.

Die Schmiereinrichtung kann als Fluidkanal in der Leitmutter ausgebildet sein. Der Fluidkanal kann eine axial orientierte Komponente, insbesondere mit einer in Richtung des Werkzeugkopfes ausgebildeten Öffnung, und/oder eine schräg orientierte Komponente, insbesondere mit einer zu dem Bohrmittel weisenden Öffnung, aufweisen.

Das Übertragungselement kann auch dazu ausgebildet sein die Drehzahl des Bohrmittels von der Drehzahl des Werkzeugkopfes zu entkoppeln. Die Drehzahl des Bohrmittels kann somit niedriger oder höher sein als die Drehzahl des Werkzeugkopfes. Hierdurch kann vorteilhaft erreicht werden, dass eine Drehzahl des Bohrmittels, während des Bearbeitungsprozesses, von der zur Verfügung stehenden Antriebsdrehzahl des Stößels entkoppelt ist.

Das Gehäuse kann mit dem Maschinen-Revolver starr verbunden sein. Der Werkzeug-Schaft kann eine Schaft-Hülse aufweisen, welche in dem Gehäuse drehfest und/oder in Richtung der Werkzeug-Längsachse verschiebbar gelagert sein kann. Der Werkzeugkopf kann gegenüber der Schaft-Hülse um die Werkzeug-Längsachse drehbar gelagert sein. Das Bohrmittel kann innerhalb der Schaft-Hülse angeordnet sein. Das Bohrmittel kann gegenüber der Schaft-Hülse drehbar und/oder axial verschiebbar gelagert sein. Zwischen dem Gehäuse und der Schaft-Hülse und/oder zwischen der Schaft-Hülse und dem Bohrmittel können Linearlager, insbesondere Kugellager oder Gleitlager, angeordnet sein. Zwischen dem Werkzeugkopf und der Schaft-Hülse und/oder zwischen der Schaft-Hülse und dem Bohrmittel können Axiallager oder Radiallager, insbesondere in Form von Kugellagern oder Gleitlagern, angeordnet sein.

Der Werkzeug-Schaft kann einteilig ausgebildet sein. Der Werkzeug-Schaft kann drehfest und axial fest mit dem Werkzeugkopf und dem Bohrmittel verbunden sein. Der Werkzeugkopf kann einteilig mit dem Werkzeug-Schaft ausgebildet sein. Hierdurch wird eine besonders wirtschaftliche Herstellung des Bohrmittels ermöglicht.

Alternativ zum Betrieb des Bohrwerkzeuges auf einer Revolver-Stanzvorrichtung mit drehbarem Maschinen-Revolver kann das Bohrwerkzeuge auch auf einer Stanzvorrichtung, insbesondere einer Band-Stanzvorrichtung oder einer Coil-Stanzvorrichtung, mit einer linear verlagerbaren oder feststehenden Werkzeugaufnahme oder auf einer beliebigen anderen Stanzvorrichtung betrieben werden. Insbesondere kann das Bohrwerkzeug an einem Maschinentisch oder an einem Maschineneinzelplatz angebracht sein.

Ein Bohrwerkzeug nach Anspruch 2 gewährleistet eine effektive Übertragung von Drehbewegungen von dem Stößel auf das Bohrmittel. Zur Übertragung der Drehbewegung von dem Werkzeugkopf auf das Bohrmittel ist der Werkzeugkopf über die Schaft-Hülse des Werkzeug-Schaftes drehfest mit dem Bohrmittel verbunden. Die Verbindung zwischen dem Werkzeugkopf und dem Bohrmittel kann starr ausgebildet sein. Die Drehbewegung des Stößels kann somit auf einfache Weise von dem Werkzeugkopf auf das Bohrmittel übertragen werden.

Ein Bohrwerkzeug nach Anspruch 3 gewährleistet eine effiziente und robuste Übertragung von Hubbewegungen von der Stanzvorrichtung auf das Bohrwerkzeug. Der Stößeleingriff kann eine Stößel-Druckfläche aufweisen. Über die Stößel-Druckfläche wirkt der Stößel mit dem Stößeleingriff zur Übertragung der Hubbewegungen des Stößels auf den Werkzeugkopf zusammen. Die Stößel-Druckfläche kann eben sein. Die Stößel-Druckfläche kann auch konisch oder kugelförmig sein. Hierdurch kann eine verbesserte Zentrierung erreicht werden. Das Material des Werkzeugkopfes kann im Bereich des Stößeleingriffs gehärtet sein.

Ein Bohrwerkzeug nach Anspruch 4 gewährleistet eine robuste und effektive Übertragung der Drehbewegung von dem Stößel auf den Werkzeugkopf. Die Verbindung zwischen dem Stößel und dem Werkzeugkopf zur Übertragung der Drehbewegung kann kraft- und/oder formschlüssig ausgebildet sein. Die stirnseitige Profilierung des Stößeleingriffs kann als stirnseitige Verzahnung ausgebildet sein. Die umfangsseitige Profilierung des Stößeleingriffs kann in Form einer Passfederverbindung oder in Form einer Keilwelle oder in Form einer Polygonwelle oder in Form einer Kerbverzahnung vorliegen. Die Geometrie des Stößeleingriffs kann zur formschlüssigen Übertragung der Drehbewegung als Gegenstück zur Geometrie des Stößels ausgebildet sein.

Ein Bohrwerkzeug nach Anspruch 5 gewährleistet eine besonders einfache Anbringung des Bohrmittels an dem Bohrwerkzeug. Die Einsatzhülse kann in dem Werkzeug-Schaft drehbar gelagert sein. Die Einsatzhülse ist mit dem Werkzeugkopf drehfest verbunden. Das Bohrmittel ist in der Einsatzhülse drehfest und axial fest angebracht. Zur Befestigung des Bohrmittels in der Einsatzhülse kann die Einsatzhülse einen oder mehrere Magneten oder ein federndes Druckstück aufweisen. Zur Übertragung der Drehbewegung können das Bohrmittel und die Einsatzhülse formschlüssig miteinander verbunden sein.

Bei einem Verfahren zum Betrieb eines Bohrwerkzeuges nach Anspruch 6 wird mittels der Stanzvorrichtung das Bohrmittel durch das Werkstück geführt. Der Drehantrieb des Bohrmittels erfolgt über einen externen Antrieb der Stanzvorrichtung, der mit dem Bohrwerkzeug über den Stößeleingriff des Werkzeugkopfes in Verbindung steht. Die Hubbewegung kann beispielsweise durch die Hubbewegung des Stößels über den Stößeleingriff auf das Bohrwerkzeug und das Bohrmittel übertragen werden. Über eine Steuerung der Stanzvorrichtung kann die Hubbewegung des Stößels mit der Drehbewegung synchronisiert werden. Für ein zu schneidendes Gewinde können beispielsweise entsprechende Vorgaben für die Hubbewegung abhängig von der Drehbewegung, insbesondere zur Ausbildung einer vorgegebenen Gewindesteigung, realisiert werden. Die kombinierte Steuerung der Hub- und Drehbewegung ist für eine zu reibende Bohrung vorteilhaft und ermöglicht das Einbringen qualitativ hochwertiger Bohrungen in das Werkstück. Das Verfahren ermöglicht grundsätzlich den Einsatz des Bohrwerkzeuges auf einer Fest-Station des Maschinen-Revolvers der Stanzvorrichtung.

Ein Verfahren zum Betrieb eines Bohrwerkzeuges nach Anspruch 7 ermöglicht eine effiziente und wirtschaftliche Einbringung des Gewindes in das Werkstück. Die auf den Werkzeugkopf übertragene Hubbewegung kann derart erfolgen, dass ein Spalt zwischen dem Werkzeug-Schaft und dem Werkstück entsteht, der geringer ist als 5 mm, insbesondere geringer ist als 3 mm, insbesondere geringer ist als 2 mm, insbesondere geringer ist als 1 mm. Das Verlagern des Bohrmittels in Richtung des Werkstückes durch die auf den Werkzeugkopf übertragene Hubbewegung erlaubt eine besonders schnelle Zustellung des Bohrmittels in Richtung des Werkstückes.

Ein Verfahren zum Betrieb eines Bohrwerkzeuges nach Anspruch 8 gewährleistet ein besonders präzises Bearbeiten eines Werkstücks. Ein Gewindebohrer kann so beispielsweise besonders präzise durch das Werkstück geführt werden.

Ein Verfahren zum Betrieb eines Bohrwerkzeuges nach Anspruch 9 gewährleistet ein effektives Einbringen des Gewindes in das Werkstück. Durch das Zurückdrehen des Bohrmittels, insbesondere des Gewindebohrers, über den Stößeleingriff des Werkzeugkopfes kann das Bohrmittel auf einfache Weise aus dem Werkstück entfernt werden. Beispielsweise kann der Gewindebohrer mittels des mit dem Stößeleingriff zusammenwirkenden externen Antriebes in einer kombinierten Hub- und Drehbewegung aus dem in das Werkstück eingebrachten Gewinde nach oben herausbewegt werden.

Ein Ausführungsbeispiel der Erfindung wird nachfolgend anhand der Zeichnungen näher erläutert. In diesen zeigen:
- Fig. 1: eine Seitenansicht einer schematisch dargestellten Stanzvorrichtung mit einem erfindungsgemäßen Bohrwerkzeug,
- Fig. 2: eine perspektivische Ansicht eines Maschinen-Revolvers der Stanzvorrichtung mit dem erfindungsgemäßen Bohrwerkzeug auf einer Fest-Station des Maschinen-Revolvers,
- Fig. 3: eine Schnittdarstellung des Bohrwerkzeuges entlang der Schnittlinie III-III in Fig. 2, wobei das Bohrwerkzeug in einer Grundposition dargestellt ist und ein Stößel außer Eingriff mit einem Werkzeugkopf steht,
- Fig. 4: in einer zu Fig. 3 ähnlichen Darstellung eine Schnittdarstellung des Bohrwerkzeuges in einer Zustellposition in der der Stößel in Eingriff mit dem Werkzeugkopf steht und ein Werkzeug-Schaft in Richtung eines Werkstückes zugestellt ist,
- Fig. 5: in einer zu Fig. 3 ähnlichen Darstellung eine Schnittdarstellung des Bohrwerkzeuges in einer Schnitt-Position in der ein an dem Werkzeug-Schaft angebrachtes Bohrmittel das Werkstück durchdringt,
- Fig. 6: eine Explosionsansicht des Bohrwerkzeuges aus Fig. 2 ohne ein Gehäuse und
- Fig. 7: eine Schnittdarstellung des Bohrwerkzeuges entlang der Schnittlinie VII-VII in Fig. 6, wobei das Bohrwerkzeug in der Grundposition dargestellt ist.

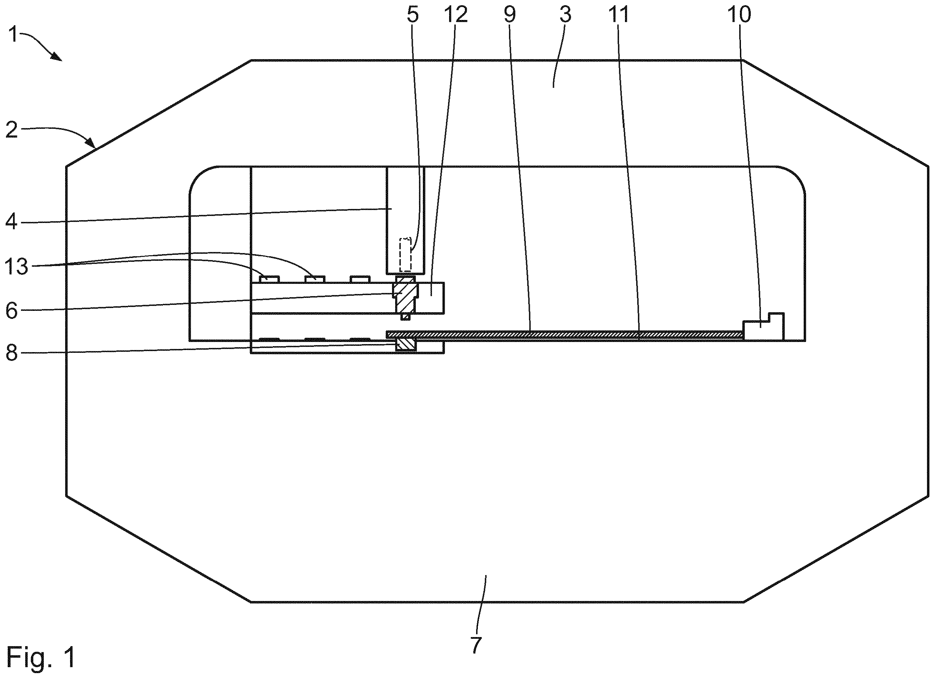

Eine Stanzvorrichtung 1, wie in Fig. 1 dargestellt, umfasst eine Rahmenstruktur 2, an deren Rahmenoberteil 3 ein Betätigungselement 4 mit einem Stößel 5 angebracht ist. Unter dem Stößel 5 ist ein Bohrwerkzeug 6 angeordnet. An einem Rahmenunterteil 7 der Stanzvorrichtung 1 ist ein Werkstück-Gegenhalter 8 angeordnet. Zwischen dem Bohrwerkzeug 6 und dem Werkstück-Gegenhalter 8 befindet sich ein Werkstück 9. Das Werkstück 9 kann über einen Positionier-Antrieb 10 auf einer Werkstück-Aufnahme 11 der Stanzvorrichtung 1 positioniert werden. Das Bohrwerkzeug 6 und der Werkstück-Gegenhalter 8 wirken als Stempel und Matrize zusammen. Das Bohrwerkzeug 6 und der Werkstück-Gegenhalter 8 sind an einem Maschinen-Revolver 12 angebracht. Durch Antrieb des Maschinen-Revolvers 12 über die Stanzvorrichtung 1 kann ein Wechsel von Bearbeitungswerkzeugen 13 erfolgen. Bei dem Werkstück 9 kann es sich um ein Blech, insbesondere um ein Metallblech, handeln.

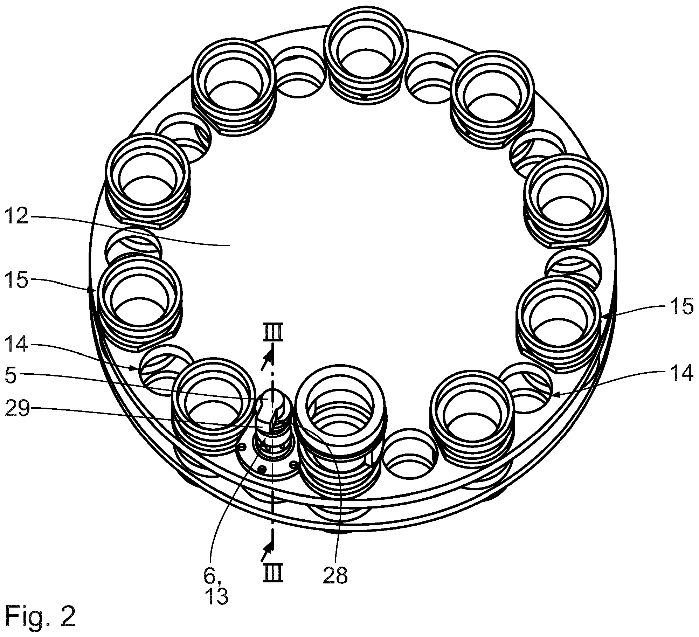

Der Maschinen-Revolver 12 mit einem daran angebrachten Bohrwerkzeug 6 ist in Fig. 2 weiter im Detail dargestellt. Der Maschinen-Revolver 12 umfasst zur Aufnahme von Bearbeitungswerkzeugen 13 Fest-Stationen 14 und Index-Stationen 15. Die Fest-Stationen 14 sowie die Index-Stationen 15 sind auf dem Maschinen-Revolver 12 kreismusterförmig angeordnet. Die Index-Stationen 15 sind über einen nicht dargestellten Werkzeug-Antrieb der Stanzvorrichtung 1 drehantreibbar. Die zwischen den Index-Stationen 15 angeordneten Fest-Stationen 14 sind nicht über diesen Werkzeug-Antrieb angetrieben. Die Index-Station 15 eignet sich beispielsweise zur Aufnahme eines Mehrfachwerkzeug-Einsatzes. Ein solcher Mehrfachwerkzeug-Einsatz kann mehrere Bearbeitungswerkzeuge 13 umfassen.

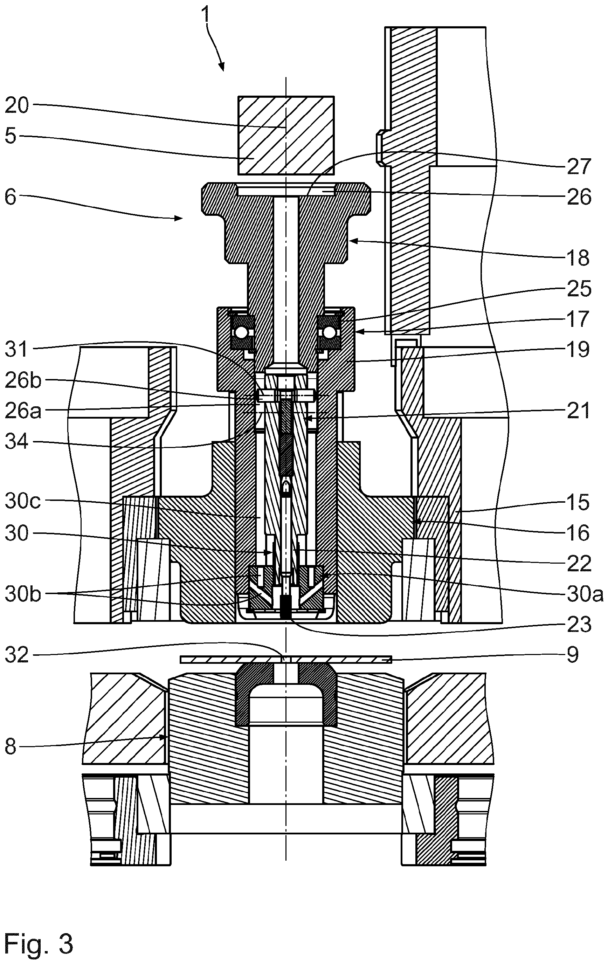

Das Bohrwerkzeug 6 ist in Fig. 3 bis Fig. 5 weiter im Detail dargestellt. Das Bohrwerkzeug 6 umfasst ein Gehäuse 16, einen Werkzeug-Schaft 17 und einen Werkzeugkopf 18.

Der Werkzeug-Schaft 17 weist eine Schaft-Hülse 19 auf. Die Schaft-Hülse 19 ist in Richtung einer Werkzeug-Längsachse 20 verschiebbar gelagert. Die Schaft-Hülse 19 ist mit dem Gehäuse 16 drehfest verbunden. Die Lagerung der Schaft-Hülse 19 in dem Gehäuse 16 kann als Linearlager, insbesondere in Form eines Gleitlagers oder eines Kugellagers ausgebildet sein. An der Schaft-Hülse 19 ist eine Schaftbohrung 20a ausgebildet. In die Schaftbohrung ist ein Druckstück 20b eingebracht. Das Druckstück 20b greift in der Grundposition des Bohrwerkzeuges 6 in eine Kopfbohrung 20c des Werkzeugkopfes 18 ein. Ein Verdrehen des Werkzeugkopfes 18 gegenüber der Schaft-Hülse 19 ist somit in der Grundposition des Bohrwerkzeuges 6 nur bei Überwinden eines, durch das Druckstück 20b definierten, Drehmomentes möglich.

Der Werkzeug-Schaft 17 umfasst des Weiteren ein Übertragungselement 21 und eine Einsatzhülse 22 zur Aufnahme eines Bohrmittels 23. Das Bohrmittel 23 ist ein Gewindebohrer. Das Übertragungselement 21 und die Einsatzhülse 22 sind innerhalb der Schaft-Hülse 19 angeordnet. Das Bohrmittel 23 ist mit der Einsatzhülse 22 und dem Übertragungselement 21 drehfest verbunden. Dase Bohrmittel 23 ist mit der Einsatzhülse 22 in axialer Richtung fest verbindbar. Die Einsatzhülse 22 ist in der Schaft-Hülse 19 axial verschiebbar und über ein Radiallager drehbar gelagert.

Der Werkzeugkopf 18 ist mit der Schaft-Hülse 19 in axialer Richtung fest verbunden. Zwischen Werkzeugkopf 18 und Schaft-Hülse 19 ist ein Axiallager 25 in Form eines Kugellagers angeordnet und gewährleistet eine Verdrehung des Werkzeugkopfes 18 gegenüber der Schaft-Hülse 19.

Der Werkzeugkopf 18 weist an seiner Oberseite einen Stößeleingriff 26 zur Übertragung von axialen Hub- und Drehbewegungen durch den Stößel 5 auf. Zur Aufnahme des Stößels 5 und zur Übertragung axialer Kräfte weist der Stößeleingriff 26 eine ebene Stößel-Druckfläche 27 auf. Zur drehfesten Verbindung des Stößels 5 mit dem Werkzeugkopf 18 weist der Stößeleingriff 26 des Weiteren eine stirnseitige Profilierung auf. Die stirnseitige Profilierung ist in Form einer radialen Nut 28 ausgebildet. Der Stößel 5 weist zum Eingriff in die radiale Nut 28 des Stößeleingriffs 26 eine radiale Rippe 29 auf. Alternativ kann der Stößeleingriff auch eine umfangsseitige Profilierung, insbesondere in Form einer Verzahnung oder einer Nut/Feder-Verbindung aufweisen. Der Stößel 5 ist mit dem Werkzeugkopf 18 bezüglich einer Drehung um die Werkzeug-Längsachse 20 formschlüssig verbunden. Der Stößeleingriff 26 ist derart ausgebildet, dass der Stößel 25 in axialer Richtung nach oben aus dem Stößeleingriff 26 entfernt werden kann.

Der Werkzeugkopf 18 weist eine Ausnehmung 26a in Form eines Langlochs auf. Das Übertragungselement 21 ist über einen Stift 26b, der in die Ausnehmung 26a eingreift, drehfest und axial verschiebbar mit dem Werkzeugkopf 18 verbunden. Das Übertragungselement 21 ist zwischen dem Werkzeugkopf 18 und der Einsatzhülse 22 angeordnet und drehfest mit dieser verbunden. Das Übertragungselement 21 ist als Leitspindel, insbesondere mit einem Trapezgewindetrieb oder einem Kugelgewindetrieb, ausgebildet. Das Übertragungselement 21 weist ein Spindelelement 30 mit einem Außengewinde auf. Das Außengewinde des Spindelelements 30 greift in ein Innengewinde der einer Leitmutter 30a ein, die drehfest mit der Schaft-Hülse 19 verbunden ist. Das Spindelelement 30 ist mit der Einsatzhülse 22 drehfest verbunden. Die Leitmutter 30a weist einen Fluidkanal 30b auf. Der Fluidkanal 30b ist zur Leitung von Kühlschmiermitteln ausgebildet. Das Kühlschmiermittel wird mittels des Fluidkanales 30b von einer Schaftnut 30c über die Leitmutter 30a zu dem Bohrmittel 23 geleitet.

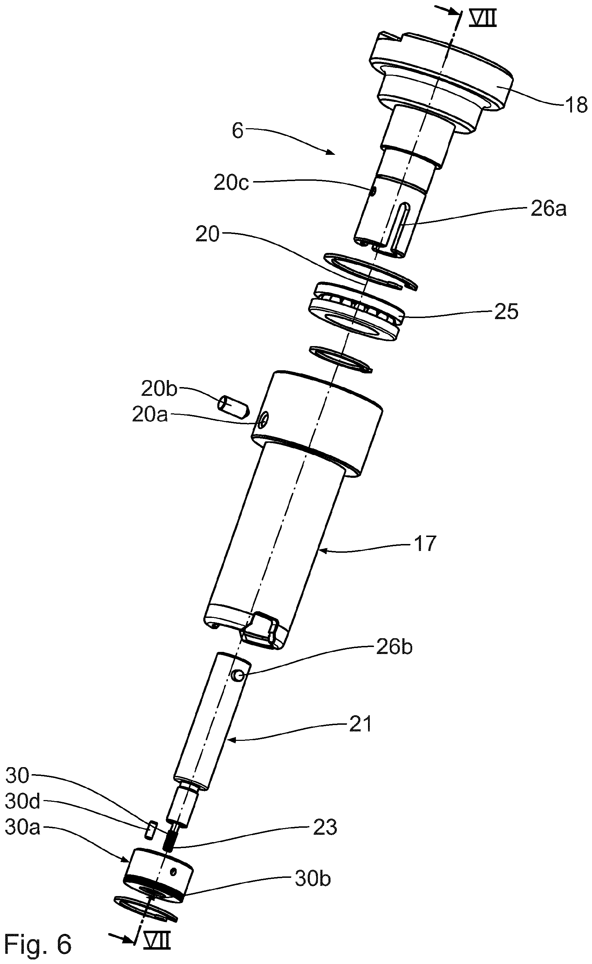

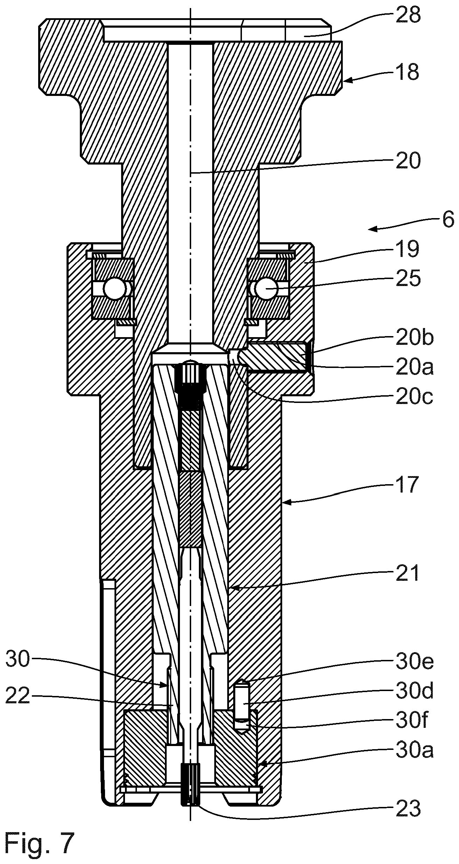

Das Bohrwerkzeug 6 ist in Fig. 6 und Fig. 7 weiter im Detail dargestellt. Zwischen der Schaft-Hülse 19 und der Leitmutter 30a ist ein Leitmutter-Stift 30d angeordnet. Der Leitmutter-Stift 30d ermöglicht die drehfeste Verbindung zwischen der Leitmutter 30a und der Schaft-Hülse 19. Zur Aufnahme des Leitmutter-Stiftes 30d weist die Schaft-Hülse 19 eine Schaft-Stift-Bohrung 30e und die Leitmutter 30a eine Mutter-Stift-Bohrung 30f auf.

Die Funktionsweise des Bohrwerkzeuges 6 für eine Stanzvorrichtung 1 ist wie folgt:
Das Bohrwerkzeug 6 wird durch Betätigung des Maschinen-Revolvers 12 unter dem Stößel 5 des Betätigungselements 4 angeordnet. Das Werkstück 9 wird mittels des Positionierantriebes 10 zwischen dem Bohrwerkzeug 6 und dem Werkstück-Gegenhalter 8 positioniert.

Das Bohrwerkzeug 6 befindet sich in seiner Grundposition und der Stößel 5 steht außer Eingriff mit dem Werkzeugkopf 18. Das Spindelelement 30 befindet sich in einer Kopf-Position 31. Das Bohrmittel 23 befindet sich innerhalb des Werkzeug-Schaftes 17 und außer Eingriff mit dem Werkstück 9. Das Werkstück 9 ist derart unter dem Bohrwerkzeug 6 positioniert, dass eine Bohrung 32 koaxial zu der Werkzeug-Längsachse 20 ausgerichtet ist.

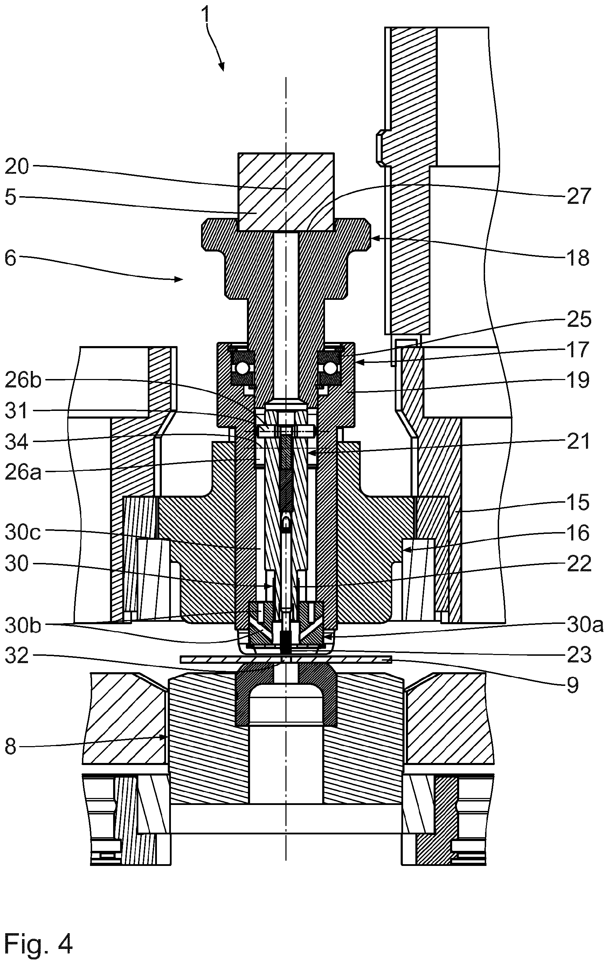

Fig. 4 zeigt das Bohrwerkzeug 6 in einer Zustellposition. Der auf den Stö-ßeleingriff 26 einwirkende Stößel 5 ist in axialer Richtung nach unten verlagert und der Werkzeug-Schaft 17 ist in Richtung des Werkstücks 9 verschoben. Die Schaft-Hülse 19 wird auf einen Abstand von ca. 1 mm an das Werkstück 9 zugestellt. Das Bohrmittel 23 befindet sich innerhalb des Werkzeug-Schaftes 17 und überragt diesen nicht.

Der Werkzeugkopf 18 wird über den Stößel 5 und den Stößeleingriff 26 drehangetrieben. Die Drehbewegung wird von dem Werkzeugkopf 18 auf das Übertragungselement 21 übertragen. Das mit dem Außengewinde versehene Spindelelement 30 dreht sich in dem Innengewinde der Leitmutter 30a und wird dabei axial nach unten verlagert. Die mit dem Übertragungselement 21 verbundene Einsatz-Hülse 22 wird durch die Rotation des Stößels 5 gedreht und über das Spindelelement 30 und die Leitmutter 30a axial nach unten bewegt. Das in der Einsatz-Hülse 22 angeordnete Bohrmittel 23 wird so durch die Bohrung 32 des Werkstücks 9 bewegt. Das als Gewindebohrer ausgeführte Bohrmittel 23 schneidet dabei ein Gewinde 33 in das Werkstück 9.

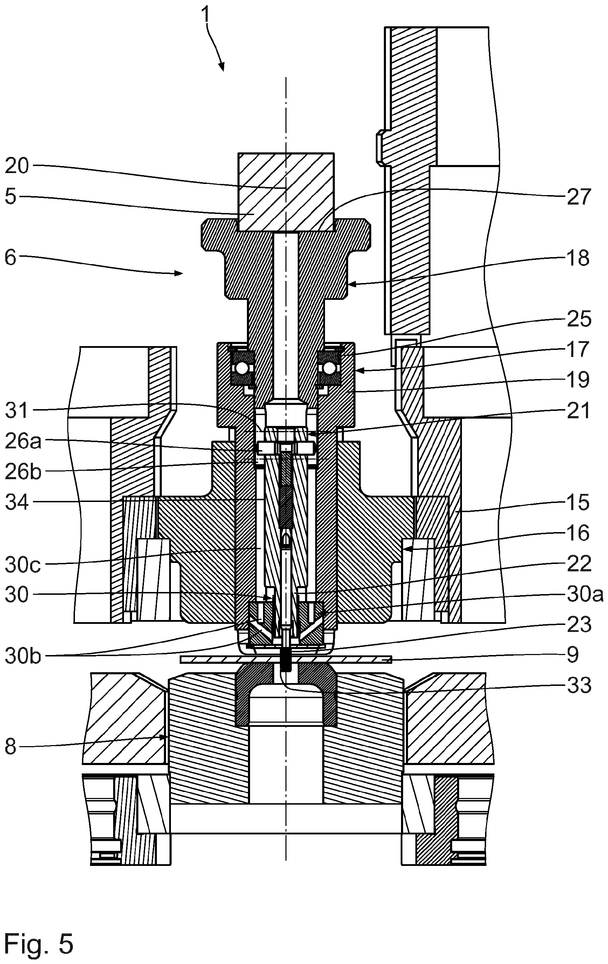

Fig. 5 zeigt das Bohrwerkzeug 6 in der Schnitt-Position. Der Werkzeug-Schaft 17 ist unverändert mit einem Abstand von ca. 1 mm auf das Werkstück 9 zugestellt. Das Spindelelement 30 befindet sich in einer gegenüber der Kopf-Position 31 axial nach unten verlagerten Schnitt-Position 34. Das Bohrmittel 23 durchdringt das Werkstück 9 vollständig.

Zum Verlagern des Bohrwerkzeuges 6 in die Grundposition wird der Stößel 5 zunächst in entgegengesetzter Richtung gedreht. Das Spindelelement 30 wird dadurch in seine Kopf-Position 31 zurückverlagert und das Bohrmittel 23 wird aus dem Werkstück 9 entfernt. Sobald das Bohrmittel 23 außer Eingriff mit dem Werkstück 9 steht und gänzlich innerhalb des Werkzeug-Schaftes 17 liegt ist die Zustellposition des Bohrwerkzeuges 6 ist erreicht. Der Stößel 5 wird mittels der Stanzvorrichtung 1 in axialer Richtung nach oben bewegt, wodurch der Werkzeug-Schaft 17 ebenfalls in axialer Richtung nach oben verlagert wird. Die weitere Verlagerung des Stößels 5 in axialer Richtung nach oben bewirkt ein Entkoppeln des Stößels 5 von dem Stößeleingriff 26. Das Bohrwerkzeug 6 befindet sich in der Grundposition.

Zur weiteren Bearbeitung des Werkstückes 9 kann dieses über den Positionier-Antrieb 10 gegenüber dem Bohrwerkzeug 6 neu positioniert werden, um ein weiteres Gewinde 33 zu formen. Alternativ kann das Bearbeitungswerkzeug 13 durch Betätigung des Maschinen-Revolvers 12 gewechselt werden. Das einzuwechselnde Bearbeitungswerkzeug 13 kann auf einer Fest-Station 14 oder auf einer Index-Station 15 angeordnet sein. Das einzuwechselnde Bearbeitungswerkzeug 13 kann ein weiteres Bohrwerkzeug 6 oder ein anderes Bearbeitungswerkzeug 13 sein.

Alternativ kann das Bohrmittel 23 als Reibahle ausgebildet sein. Das Reiben einer in das Werkstück 9 eingebrachten Bohrung 32 kann in zwei Schritten erfolgen. In einem ersten Schritt wird das Bohrmittel 23 durch eine von dem Stößel 5 auf den Stößeleingriff 26 übertragene kombinierte Hub- und Drehbewegung durch das Werkstück 9 geführt werden. Das Bohrwerkzeug 6 wird dabei unmittelbar aus der Grundposition in die Schnitt-Position verlagert. Über den Stößeleingriff 26 wird das Bohrmittel 23 in einem zweiten Schritt mittels einer kombinierten Hub- und Drehbewegung aus dem Werkstück 9 heraus und in die Grundposition zurückverlagert. Die Drehbewegung des Bohrmittels 23 entspricht dabei in ihrer Drehrichtung der Drehbewegung des Bohrmittels 23 in dem ersten Schritt. Eine Drehrichtungsumkehr ist somit nicht notwendig.

## Patentansprüche

1. Bohrwerkzeug für eine Stanzvorrichtung (1), insbesondere für eine Revolver-Stanzvorrichtung, umfassend
- ein Gehäuse (16),
- einen in dem Gehäuse (16) angeordneten Werkzeug-Schaft (17), mit einem darin aufgenommenen Bohrmittel (23) und
- einen an dem Werkzeug-Schaft (17) angeordneten, mit der Stanzvorrichtung (1) zusammenwirkenden Werkzeugkopf (18),
- wobei der Werkzeugkopf (18) einen Stößeleingriff (26) zur Übertragung einer Drehbewegung um eine Werkzeug-Längsachse (20) von einem externen Antrieb auf den Werkzeugkopf (18) aufweist, und
- wobei das Bohrwerkzeug (6) derart ausgeführt ist, dass es ausschließlich über den Stößeleingriff (26) angetrieben ist,
**dadurch gekennzeichnet, dass**
der Werkzeug-Schaft (17) ein Übertragungselement (21) zur Umwandlung der Drehbewegung des Werkzeugkopfes (18) in eine kombinierte Dreh- und Hubbewegung des Bohrmittels (23) umfasst.

2. Bohrwerkzeug nach Anspruch 1, **dadurch gekennzeichnet, dass** der Werkzeugkopf (18) über den Werkzeug-Schaft (17) drehfest mit dem Bohrmittel (23) verbunden ist.

3. Bohrwerkzeug nach Anspruch 1 oder 2, **dadurch gekennzeichnet, dass** der Stößeleingriff (26) zur Übertragung einer axialen Hubbewegung von einem externen Antrieb ausgebildet ist.

4. Bohrwerkzeug nach einem der Ansprüche 1 bis 3, **dadurch gekennzeichnet, dass** der Stößeleingriff (26) eine stirnseitige und/oder umfangsseitige Profilierung zur Übertragung der Drehbewegung aufweist.

5. Bohrwerkzeug nach einem der Ansprüche 1 bis 4, **dadurch gekennzeichnet, dass** der Werkzeug-Schaft (17) zur Aufnahme des Bohrmittels (23) eine Einsatzhülse (22) aufweist.

6. Verfahren zum Betrieb eines Bohrwerkzeuges für eine Stanzvorrichtung, insbesondere für eine Revolverstanz-Vorrichtung, umfassend die folgenden Schritte:
- Bereitstellen eines Bohrwerkzeuges (6) nach einem der Ansprüche 1 bis 5,
- Verbringen des Bohrwerkzeuges (6) in eine Grundstellung, in der das Bohrmittel (23) außer Eingriff mit einem zu bearbeitenden Werkstück (9) steht,
- Drehen des Werkzeugkopfes (18) über den Stößeleingriff (26) um die Werkzeug-Längsachse (20) mittels des externen Antriebes, wobei das Bohrmittel (23) zum Bearbeiten des Werkstücks (9) gedreht und entlang der Werkzeug-Längsachse (20) in Richtung des Werkstücks (9) verlagert wird,
- Drehen des Werkzeugkopfes (18) über den Stößeleingriff (26) um die Werkzeug-Längsachse (20), wobei das Bohrmittel (23) gedreht und entlang der Werkzeug-Längsachse (20) von dem Werkstück (9) wegverlagert wird, bis das Bohrmittel (23) nicht mehr in Eingriff mit dem Werkstück (9) steht.

7. Verfahren nach Anspruch 6, **dadurch gekennzeichnet, dass** das Bohrwerkzeug (6) vor dem Drehen des Werkzeugkopfes (18), durch Verlagern des Werkzeugkopfes (18) über den Stößeleingriff (26) in Richtung des Werkstücks (9) mittels eines externen Antriebes zur Verlagerung des Bohrmittels (23) in Richtung des Werkstücks (9), aus seiner Grundstellung verbracht wird und dass das Bohrwerkzeug (6) nach dem Drehen, durch ein Zurückverlagern des Werkzeugkopfes (18) von dem Werkstück (9) weg, in seine Grundstellung zurückverlagert wird.

8. Verfahren nach Anspruch 6 oder 7, **dadurch gekennzeichnet, dass** das Bohrmittel (23) ausschließlich mittels einer von einem externen Antrieb übertragenen Drehbewegung durch das Werkstück (9) bewegt wird.

9. Verfahren nach einem der Ansprüche 6 bis 8, **dadurch gekennzeichnet, dass** das Drehen des Bohrmittels (23) während der Verlagerung des Bohrmittels (23) von dem Werkstück (9) weg gegenüber dem Drehen des Bohrmittels (23) bei dessen Verlagerung in Richtung des Werkstücks (9) mit umgekehrter Drehrichtung erfolgt.

## Claims

1. Drilling tool for a punch device (1), in particular for a turret punch device, comprising
- a housing (16),
- a tool shank (17) arranged in the housing (16) with a drilling means (23) accommodated therein, and
- a tool head (18) arranged on the tool shank (17) to interact with the punch device (1),
- wherein the tool head (18) has a ram engagement portion (26) to transmit a rotational movement about a tool longitudinal axis (20) from an external drive to the tool head (18), and
- wherein the drilling tool (6) is configured in such way that it is driven exclusively via the ram engagement portion (26),
**characterized in that**
the tool shank (17) comprises a transmission element (21) to convert the rotational movement of the tool head (18) into a combined rotational and lifting movement of the drilling means (23).

2. Drilling tool according to claim 1, **characterized in that** the tool head (18) is connected, via the tool shank (17), to the drilling means (23) in a torque-proof manner.

3. Drilling tool according to claim 1 or 2, **characterized in that** the ram engagement portion (26) configured to transmit an axial lifting movement is formed by an external drive.

4. Drilling tool according to any one of the claims 1 to 3, **characterized in that** the ram engagement portion (26) has a front-end and/or circumferential profiled section for transmitting the rotational movement.

5. Drilling tool according to any one of claims 1 to 4, **characterized in that** the tool shank (17) has an insert sleeve (22) to accommodate the drilling means (23).

6. Method for operating a drilling tool for a punch device, in particular for a turret punch device, the method comprising the following steps:
- providing a drilling tool (6) according to any one of claims 1 to 5,
- moving the drilling tool (6) into an initial position in which the drilling means (23) does not engage a workpiece (9) to be machined,
- rotating the tool head (18) about the tool longitudinal axis (20) via the ram engagement portion (26) by means of the external drive, causing the drilling means (23) to be rotated and displaced along the tool longitudinal axis (20) in the direction of the workpiece (9) in order to machine the workpiece (9),
- rotating the tool head (18) via the ram engagement portion (26) about the tool longitudinal axis (20), causing the drilling means (23) to be rotated and moved away from the workpiece (9) along the tool longitudinal axis (20) until the drilling means (23) no longer engages the workpiece (9).

7. Method according to claim 6, **characterized in that** prior to rotating the tool head (18), the drilling tool (6) is moved out of its initial position by displacing the tool head (18), via the ram engagement portion (26), in the direction of the workpiece (9) by means of an external drive in order to move the drilling means (23) in the direction of the workpiece (9), and that after rotating, the drilling tool (6) is moved back into its initial position by moving the tool head (18) back and away from the workpiece (9).

8. Method according to claim 6 or 7, **characterized in that** the drilling means (23) is moved through the workpiece (9) exclusively by means of a rotational movement transmitted by an external drive.

9. A method according to any one of claims 6 to 8, **characterized in that** while the drilling means (23) is being moved away from the workpiece (9), the drilling means (23) is rotated in a rotational direction, which is reverse to that of the drilling means (23) when being moved in the direction of the workpiece (9).

## Revendications

1. Outil de perçage pour un dispositif de poinçonnage (1), en particulier pour un dispositif de poinçonnage à tourelle, comprenant
- un boîtier (16),
- une tige d'outil (17) disposée dans le boîtier (16), avec un moyen de perçage (23) logé dans celle-ci, et
- une tête d'outil (18) disposée sur la tige d'outil (17) et coopérant avec le dispositif de poinçonnage (1),
- dans lequel la tête d'outil (18) présente un engagement de poussoir (26) pour transmettre un mouvement de rotation autour d'un axe longitudinal d'outil (20) d'un entraînement externe à la tête d'outil (18), et
- dans lequel l'outil de perçage (6) est réalisé de telle sorte qu'il est entraîné exclusivement par l'intermédiaire de l'engagement de poussoir (26),
**caractérisé en ce que**
ladite tige d'outil (17) comprend un élément de transmission (21) pour convertir le mouvement de rotation de la tête d'outil (18) en un mouvement combiné de rotation et de levage du moyen de perçage (23).

2. Outil de perçage selon la revendication 1, **caractérisé en ce que** ladite tête d'outil (18) est reliée de manière solidaire en rotation au moyen de perçage (23) par l'intermédiaire de ladite tige d'outil (17).

3. Outil de perçage selon la revendication 1 ou 2, **caractérisé en ce que** ledit engagement de poussoir (26) est conçu pour transmettre un mouvement de levage axial à partir d'un entraînement externe.

4. Outil de perçage selon l'une quelconque des revendications 1 à 3, **caractérisé en ce que** ledit engagement de poussoir (26) présente un profilage frontal et/ou périphérique pour la transmission du mouvement de rotation.

5. Outil de perçage selon l'une quelconque des revendications 1 à 4, **caractérisé en ce que** ladite tige d'outil (17) présente une douille d'insertion (22) pour recevoir ledit moyen de perçage (23).

6. Procédé d'opération d'un outil de perçage pour un dispositif de poinçonnage, en particulier pour un dispositif de poinçonnage à tourelle, comprenant les étapes suivantes :
- fournir un outil de perçage (6) selon l'une quelconque des revendications 1 à 5,
- mettre l'outil de perçage (6) dans une position initiale dans laquelle le moyen de perçage (23) est hors de prise avec une pièce à usiner (9),
- tourner la tête d'outil (18) par l'intermédiaire de l'engagement de poussoir (26) autour de l'axe longitudinal d'outil (20) au moyen de l'entraînement externe, le moyen de perçage (23) étant tourné pour usiner la pièce à usiner (9) et déplacé le long de l'axe longitudinal d'outil (20) en direction de la pièce à usiner (9),
- tourner la tête d'outil (18) par l'intermédiaire de l'engagement de poussoir (26) autour de l'axe longitudinal d'outil (20), le moyen de perçage (23) étant tourné et déplacé le long de l'axe longitudinal d'outil (20) à l'écart de la pièce à usiner (9) jusqu'à ce que le moyen de perçage (23) ne soit plus en engagement avec la pièce à usiner (9).

7. Procédé selon la revendication 6, **caractérisé en ce que,** avant la rotation de ladite tête d'outil (18), l'outil de perçage (6) est déplacé en direction de ladite pièce à usiner (9) par l'intermédiaire dudit engagement de poussoir (26) de ladite tête d'outil (18) au moyen d'un entraînement externe pour déplacer ledit moyen de perçage (23) en direction de ladite pièce à usiner (9), de sa position initiale et **en ce que** ledit outil de perçage (6) est ramené dans sa position initiale après la rotation, par un déplacement en arrière de ladite tête d'outil (18) en s'éloignant de ladite pièce à usiner (9).

8. Procédé selon la revendication 6 ou 7, **caractérisé en ce que** ledit moyen de perçage (23) est déplacé à travers ladite pièce à usiner (9) exclusivement au moyen d'un mouvement de rotation transmis par un entraînement externe.

9. Procédé selon l'une quelconque des revendications 6 à 8, **caractérisé en ce que** la rotation dudit moyen de perçage (23) pendant le déplacement du moyen de perçage (23) à l'écart de ladite pièce à usiner (9) est effectuée avec un sens de rotation inversé par rapport à la rotation dudit moyen de perçage (23) lors de son déplacement en direction de ladite pièce à usiner (9).
